# EUROPEAN PATENT SPECIFICATION

(11) **EP 1 550 391 B1**
(45) Date of publication and mention of the grant of the patent: **10.10.2007**
(21) Application number: 04106981.6
(22) Date of filing: 24.12.2004
(51) Int. Cl.: A47J 31/40

(54) **Machine for preparing thick liquid food products**
Maschine zum Bereiten von dickflüssigen Nahrungsmitteln
Machine pour la préparation de produits alimentaires liquides et épais

(30) Priority: 31.12.2003 IT GE20030113
(43) Date of publication of application: 06.07.2005
(73) Proprietor: Metecna S.r.l., I-17014 Cairo Montenotte, Province of Savona (IT)
(72) Inventor: PONGIBOVE, Enrico, 17014, CAIRO MONTENOTTE, Province of Sav (IT)
(74) Representative: Ghioni, Carlo Raoul Maria

(56) References cited:
- WO-A-98/27852
- DE-U1- 20 006 115
- GB-A- 683 323

## Description

The present invention relates to a machine for preparing food products, and in particular to a machine for preparing thick liquid products.

In food preparation, it is frequently necessary to prepare a mixture from a generally powdery solid component and a liquid component, this mixture producing a thick creamy liquid as a result of heat treatment. This kind of preparation, which relates to numerous kinds of confectioners' cream, Bechamel sauce and similar products, has to be carried out without the formation of lumps and in such a way as to yield a product with the correct consistency. Similar problems arise in the preparation of hot chocolate, which must also have specific characteristics of homogeneity and creaminess. In most cases, the best results are currently obtained with manual preparation, although this is characterized by considerable difficulty and a very low degree of repeatability.

A machine for preparing food products is known from WO9827852A.

At the present time, the preparation of hot chocolate in cafés and restaurants is rather similar to the method used in the home; this is because the appropriate chocolate compound, containing the cocoa and thickeners typical of this preparation, has to be mixed in an impromptu way with a quantity of hot milk to create a product having the desired consistency. Some other solutions have been proposed, but do not provide worthwhile results; in one case, the operator fills a container, provided with agitator means and heating means, with the compound and the milk, and then dispenses the chocolate prepared in this way on request. However, this system is subject to problems concerning the batching to be used, in addition to the considerable wastage of material that may occur at the end of each day, when the apparatus has to be emptied and washed.

For the industrial dispensing of hot drinks, machines have been produced for dispensing hot chocolate, starting with a completely lyophilized product which is mixed with hot water or hot milk. However, this results in a rather liquid chocolate which, although considered useful for the purposes of automatic food dispensing, is not compatible with the quality requirements of a good café or restaurant.

The object of the present invention is therefore to provide a machine for preparing thick liquid food products which yields a product completely identical to one prepared by hand, with markedly constant quality and reproducibility of its characteristics; this machine must also be made in a fairly simple way and must be easily maintained.

The present invention therefore proposes a machine for preparing thick liquid food products according to claim 1.

The heating means of the said chamber for cooking can comprise electrical heating means, such as thermistors or the like, inductive heating means, infrared heating means, or microwave heating means. Advantageously, the heating means can comprise means for injecting a heated gaseous fluid, supplied by suitable generating means.

In one embodiment, the said dispensing means comprise a piston, mounted slidably in the said cooking chamber, and a dispensing valve located on the bottom of the said cooking chamber. Advantageously, the said piston also acts as a control valve for the passage between the mixing chamber and the cooking chamber.

Preferably, the said mixing chamber, the said cooking chamber, the said piston and the said dispensing valve are connected to each other by sealing connections and without the need for further joining means, thus enabling the machine to be dismantled without the use of any special tools.

Further advantages and characteristics of the device according to the present invention will be made clearer by the following detailed description of an embodiment of the invention, provided, by way of example and without restrictive intent, with reference to the attached sheets of drawings, in which:
Figure 1 is a schematic block diagram showing an embodiment of the machine according to the present invention;
Figure 2 is a view in elevation of parts of the machine according to the invention;
Figure 3 is a view in longitudinal section of an enlarged detail of Figure 2;
Figure 4 is a plan view, with parts in section, of an enlarged detail of Figure 2; and
Figure 5 is a diagrammatic partial plane view of the machine according to the invention.

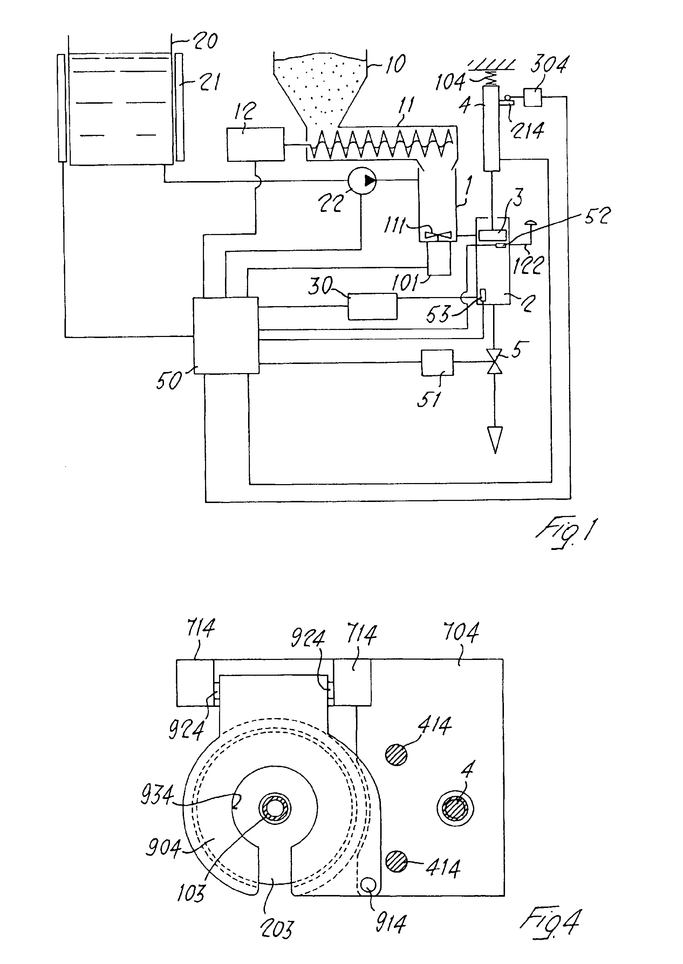

Figure 1 is a schematic block diagram of the machine according to the present invention, which in the illustrated embodiment is a machine for preparing hot chocolate; the mixing chamber 1, provided with the agitator 111 driven by the drive means 101, is supplied by the reservoir 20, provided with refrigerating means 21, which contains the milk, and the supply is made by means of the pump 22. The compound containing cocoa is contained in the hopper 10 communicating with the screw 11 driven by the motor 12; both the motor 12 and the pump 22, together with the motor 101 of the agitator 111, are connected to the control unit 50, which also controls the refrigerating means 21 of the milk reservoir 20. The mixing chamber 1 communicates with the chamber 2 for cooking the prepared mixture, and the entry of the mixture is controlled by the piston 3, which subsequently allows the mixture to emerge from the said chamber 2 through the dispensing valve 5, which is provided with drive means 51. The piston is provided with drive means 4, also connected to the control unit 50 and provided with damping means 104, and with a pin 214 which can act on a limit switch 304. The cooking chamber 2 is connected to a steam generator 30 connected to the control unit 50, and is provided with vent means 122. A level sensor 52, connected to the control unit 50, is placed nearby the vent means 122, whereas next to the bottom of the cooking chamber 2 is located a temperature sensor 53, also connected to the control unit 50.

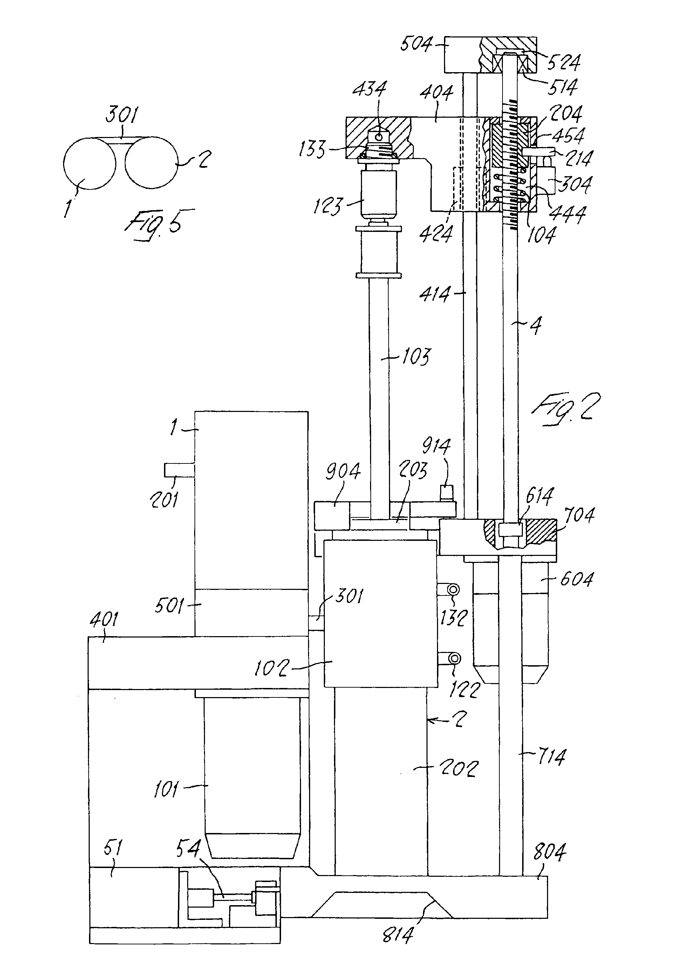

The principal members of the machine according to the invention are shown in a preferred embodiment in Figure 2; the number 1 indicates the mixing chamber, of substantially cylindrical shape, provided with a base 501 from which the passage 301 runs for the discharge of the mixed product, and with a milk supply passage 201. The chamber 1 rests on the base 401, which is connected to the electric motor 101 which drives the agitator means which are described more fully below. The passage 301 opens in the upper portion 102 of the cooking chamber 2, whose lower portion 202 is connected to the support plate 804, at the level of the cavity 814 formed in the lower wall of the plate and opposite this cavity; the vent passages 122 and 132 project radially from the portion 102 of the chamber 2.

The piston 3, not shown in the figure, is inserted in the cooking chamber 2 and is provided axially with the rod 103, which passes through the cover 203 positioned on top of the cooking chamber 2, and the end of this rod opposite that connected to the said piston 3 is connected, by means of the quick-release joint 123, to the bush 133 communicating with the steam dispensing nozzle 434 formed in the sliding piece 404. The said sliding piece is movable along the guides 414 by the action of the slide means 424; the said guides are positioned between the head 504 and the plate 714; the threaded bush 204 which interacts with the endless screw 4 is positioned in the seat 444 of the sliding piece 404; the bush 204 bears on a helical spring 104, and is provided with a radially projecting pin 214 which emerges from the seat 444 through the axial groove 454, and can interact with the microswitch 304. One end of the endless screw 4 is inserted in a cavity 524 of the head 504, in which it rotates freely because of the presence of the sliding means 514; its opposite end is connected to the power outlet 614 of the motor 604 which is fixed to the plate 704. The said plate 704 is also provided with a substantially C-shaped top cover 904, provided with locking means 914, for securing the chamber 2 with the piston 3 inserted in the said plate 704.

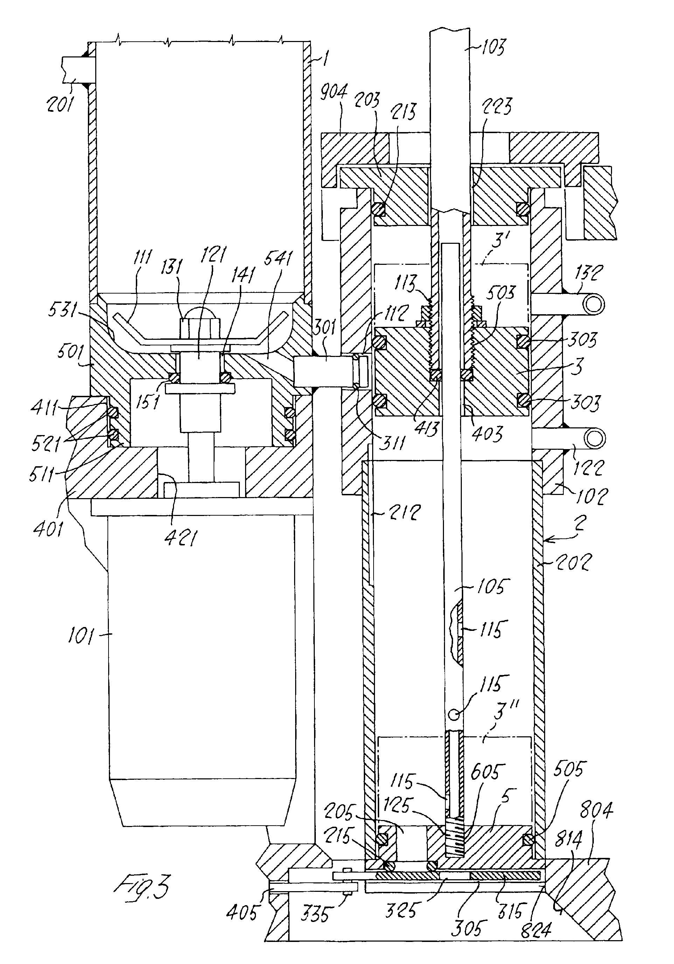

In the longitudinal section in Figure 3, the members described previously are shown in greater detail; identical numbers correspond to identical parts. The mixing chamber 1 has a bowl-shaped cavity 531 in its base 501, the agitator 111 being positioned in this cavity and fixed on the shaft 141 of the motor 101 by the bolt 131; the said shaft passes through the hole 121 formed axially in the said base, with a seal formed by the sealing means 151. The base 501 is also provided with an axial flange 511, which is fitted with a seal in the cavity 411 of the base 401; the axial hole 421 in which the shaft 141 of the motor 101 is inserted is formed on the bottom of the said cavity 411. The bowl-shaped cavity 531 communicates with the mixture discharge passage 301 by means of the channel 541 formed in the said base 501; in turn, the passage 301 is fitted with the aid of sealing means 311 into the hole 112 formed radially in the portion 102 of the cooking chamber 2. The free end of the portion 102 of the chamber 2 is covered by the cover 203, fitted in a sealed way in the chamber seal with the aid of the sealing means 213; the cover is provided with an axial hole 223 in which the rod 103 of the piston 3 is slidably inserted. The said rod 103 is connected to the piston 3 by the insertion of its threaded end 113 into the threaded cavity 503 formed axially in the said piston 3; sealing means 413 are positioned on the base of the said cavity to allow the sealed sliding of the hollow shaft 105 which passes through the axial hole 403 and is fitted telescopically into the rod 103, while at the opposite end it is connected by its threaded end 125 to the threaded cavity 605 of the body 5 of the dispensing valve. The rod 105 is provided with a plurality of radial holes 115, angularly and axially equally spaced, from the end of the rod coupled with the body 5 until about the half length of the said rod 105; the said holes 115 allow the delivering of the steam into the chamber 2.

The said dispensing valve 5 comprises an axial through hole 205 controlled by means of a shutter 315 fitted slidably in a channel 305 formed in a plane perpendicular to the axis of the said cooking chamber 2; an axial through hole 325 is formed in the shutter. At one end, the said shutter has a pin 335 which connects it to an arm 405 which interacts with the drive means 51, 52 shown in Figure 2. The portion 202 of the chamber 2 is fitted in a sealed way on the body 5 of the dispensing valve with the aid of the sealing means 505, and the body 5 is fitted in the recess 824 formed in the supporting base 804 and communicating with the cavity 814.

Figure 4 shows more clearly the top cover 904, which is shown hinged at one end by the pins 924 in the lugs 714 projecting from the plate 704. This top cover 904 has a large internal groove 934, while its peripheral portion covers the cover 203 of the cooking chamber 2 and is secured to the plate 704 by the locking means 914. In the diagrammatic view of the Figure 5 it is evident the tangential positioning of the conduit 301 which connects the mixing chamber 1 with the cooking chamber 2.

The operation of the machine according to the invention will be made clear by the following text. The liquid ingredient, for example milk, and the powdery solid ingredient, for example a cocoa-based compound, are supplied to the mixing chamber by the respective supply means; it is important to note that these means are controlled by the central unit to provide a precise batching of the ingredients, which is sufficient to ensure the good quality of the end product. The mixing is carried out in the cold state in the mixing chamber 1; the agitator means are located in the base of the chamber, which has a bowl-shaped cavity, as shown in Figure 3, which permits efficient mixing while minimizing the risk of deposition of accumulations or lumps of cocoa-based compound on the bottom. In the mixing stage, the piston 3 is in the position shown in Figure 3, in which it blocks the discharge aperture of the passage 301, thus acting as a supply valve for the cooking chamber 2. The mixing time depends on the ingredients of the mixture, and can be suitably adjusted and stored in the central control unit 50. It has been experienced that, in the case of preparation of chocolate, the amount of powdery solid ingredient required for obtaining an optimum product decreases according to the increase of the temperature into the cooking chamber 2. Particularly, if the temperature is a range between 50°C and 80°C, the amount of powdery mixture required results to be the less one; such a behaviour can be probably related to an higher yield of the reaction between the powdery ingredient and the steam fed into the cooking chamber. Accordingly, the sensor 53 will signal to the control unit 50 the temperature of the cooking chamber 2, and the same control unit 50 will regulate the feeding of the powder, taking into account of the above mentioned relationship. The position of the conduit 301, as it results in Figure 5, allows a more correct feeding of the mixture into the cooking chamber 2, thus preventing turbulences which wold compromise the homogeneity of the product.

On completion of the mixing, the piston 3 is moved to the position 3' indicated by chained lines in Figure 3, and the mixture can then filter through the channel 541 and the passage 301 into the cooking chamber 2. When all of the mixture has been deposited, occupying a large part of the portion 202 of the chamber 2, the piston is returned to the initial position, and the delivery of the steam commences, the steam being produced by the generator 30 and passed into the chamber through the radial hole 115 in the shaft 105, communicating with the rod 103 of the piston 3, which in turn is connected to the nozzle 434 of the sliding piece 404. Clearly, the cooking time can also be conveniently adjusted and then set in the control unit 50. It should be noted that the cooking is carried out substantially at ambient pressure, trials having shown that pressure cooking requires less time but is less efficient, since it limits the expansion of the mixture, which is a characteristic of fundamental importance. The excess steam then flows along the vent passage 122 which communicates with a collecting container not shown in the drawings.

The cooking time is determinated by when the heated mixture reaches the level sensor 53; it has been denoted that the only timing of the cooking does not afford effective and repeatable results; on the other hand, the expansion at a given volume is as substantial warranty of an optimum level preparation. A minimum heating time value is set in the control unit 50, based upon a temperature value detected from the sensor 53 at the beginning of the working cycle; the said preset value allows to avoid, especially at the beginning of the cooking step, that sprinkles of mixture can generate a fake signal of reached level. The cooking can not be stopped until the said minimum heating time is elapsed. Similarly, a maximum heating time has been set, on the basis of a temperature value detected at the beginning of the working cycle, so as to avoid that the cooking proceed beyond measure owing to a bad functioning of the level sensor 52; when the said maximum heating time is elapsed, the cooking is automatically stopped.

On completion of the cooking stage, the piston is progressively moved towards the position indicated by 3" in Figure 3, and the shutter 315 of the valve 5 is opened by the drive means 51, 52. The product, in this case hot chocolate, is delivered from the hole 205 of the body 5 of the valve, through the hole 325 which is now coaxial with it, and passes into the suitable container positioned in the cavity 814 of the supporting base 804. After reaching the body 5 of the dispensing valve, the piston 3 must be halted, to prevent damage to the rod 103 and the shaft 105 which is coaxial with it; for this purpose, the threaded bush 204 fitted in the sliding piece 404 which moves the rod 103 is mounted in the cavity 444 of the sliding piece on a spring 104 which has the function of damping the impact of the piston 3 on the body 5. The pin 214 projecting radially from the bush 204 then interacts with the microswitch 304 which signals the limit of travel to the central unit, which consequently stops the motor 604.

As indicated by the above description, the principal functional members of the machine according to the invention are connected to each other by sealed connections, and without any fixing means which are particularly difficult to disengage; this aspect makes the machine easy to dismantle and equally easy to clean. In this respect, the top cover 914 makes it possible to stabilize the position of the chamber 2 in which the piston 3 is inserted, without interfering with the operation of the machine, and without complicating the assembly and dismantling.

It should also be noted that the cooking chamber is kept clean by the piston itself, which slides in a sealed way along its inner walls, thus removing all accumulated traces of a product which would otherwise be difficult to eliminate. It is also possible to provide washing cycles in which a washing liquid is introduced from the passage 201 for the supply of the liquid ingredients, followed by a number of flushing operations using water.

All the functional members of the machine according to the invention could be controlled independently and linked together, but at present it is considered rather more advantageous to control the processing times, temperatures and batching by means of a central control unit consisting of an electronic computer, in which, if required, various processing programs can be stored, according to the type of product which the machine is intended to supply.

As regards the means for supplying the various ingredients, these can be made in a large variety of ways, provided that they provide control of the batching of the said ingredients at the moment of their introduction into the mixing chamber 1. Advantageously, if the ingredients require a certain type of treatment for conservation in the said supply means, it is possible to provide suitable means such as the refrigerating means 21 of the milk reservoir 20 as shown in Figure 1; the said means can also be controlled by the central control unit.

## Claims

1. Machine for preparing thick liquid food products, comprising: means for supplying and batching (10, 11) at least one substantially powdery solid ingredient, and means for supplying and batching (20, 21) at least one liquid ingredient which introduce the respective ingredients into a mixing chamber (1) provided with agitator means (101, 111); the said mixing chamber (1) communicating by means of a passage (301) controlled by valve means (3) with the chamber (2) for cooking the prepared mixture, **characterized in that** the said cooking chamber (2) is being provided with heating means (434, 103, 105, 115), and with means (3, 5, 315) for dispensing the thick liquid product formed in this way.

2. Machine according to Claim 1, **characterized in that** the said means for supplying and batching the ingredients (10, 11, 20, 21), the said agitator means (101, 111), the said valve means (3) of the communicating passage (301) between the mixing chamber (1) and the cooking chamber (2), the said heating means (30), and the said dispensing means (3, 5, 315) are all connected to a suitably programmed central control unit (50).

3. Machine according Claim 1 or 2, in which are provided level sensor means (52), connected to the said central control unit (50), positioned at a given level into the said cooking chamber (2).

4. Machine according anyone of the preceding Claims 1 to 3, in which are provided temperature sensor means (53) positioned into the said cooking chamber (2).

5. Machine according to anyone of the preceding Claims 1 to 4, in which the said dispensing means comprise a piston (3) provided with drive means (4, 404), mounted slidably in the said cooking chamber (2) and inserted removably in one end (102) of the said chamber, and a dispensing valve (5, 315) positioned at the opposite end (202) of the said cooking chamber (2).

6. Machine according to Claim 5, in which the said drive means (4, 404) of the said piston (3) are provided with stop means (214, 304) at the end of the travel of the said piston (3).

7. Machine according to Claim 5 or 6, in which the said cooking chamber (2) is provided on its inner side wall with at least an axial groove (212), along a relevant portion of the said wall.

8. Machine according to anyone of the preceding Claims 5 to 7, in which the said valve means of the said passage (301) comprise the said piston (3), the opening of the said passage (301) into the said cooking chamber (2) being blocked by the said piston.

9. Machine according to anyone of the preceding Claims 1 to 8, in which said heating means of the cooking chamber (2) comprise means (434, 103, 105, 115) for injecting a heated gaseous fluid, supplied by suitable generating means (30).

10. Machine according to Claim 9, in which the said cooking chamber (2) is provided with vent means (122) of heated gaseous fluid in excess.

11. Machine according to claim 9 or 10, in which the said means for injecting a heated gaseous fluid comprise an outlet (434) for the supply of the fluid, connected to one end of the rod (103) of the said piston (3), the said rod (103) being tubular and hollow, and a shaft (105) which is also tubular and hollow being provided, this shaft being coaxial and concentric with the said rod (103) and inserted slidably at one end into the rod, the opposite end being connected to the wall (5) of the said cooking chamber (2) on which the said dispensing valve (5, 315) is positioned, a plurality of radial holes (115) for discharging the heated gaseous fluid being provided.

12. Machine according to claim 11, in which the said discharging holes (115) of the heated gaseous fluid are axially and angularly equally spaced one with the other.

13. Machine according to any one of the preceding Claims 5 to 12, in which the said mixing chamber (1), the said cooking chamber (2), the said piston (3) and the said dispensing valve (5, 315) are connected to each other by sealing connections and without the need for further joining means, thus enabling the machine to be dismantled without the use of any special tools.

## Patentansprüche

1. Maschine zum Bereiten von dickflüssigen Nahrungsmitteln, bestehend aus: Mitteln für das Zuführen und Dosieren (10, 11) zumindest einer im Wesentlichen pulverförmigen festen Zutat und Mitteln für das Zuführen und Dosieren (20, 21) zumindest einer flüssigen Zutat, welche die jeweiligen Zutaten in eine Mischkammer (1) einleiten, die mit Rühreinrichtungen (101, 111) ausgestattet ist; wobei die Mischkammer (1) über einen Durchgang (301), der über Ventileinrichtungen (3) gesteuert wird, mit der Kammer (2) zum Kochen der bereiteten Mischung verbunden ist, **dadurch gekennzeichnet, dass** die Kochkammer (2) mit Heizeinrichtungen (434, 103, 105, 115) und mit Einrichtungen (3, 5, 315) zur Ausgabe des auf diese Weise zubereiteten dickflüssigen Produktes ausgestattet ist.

2. Maschine nach Anspruch 1, **dadurch gekennzeichnet, dass** die Mittel für das Zuführen und Dosieren der Zutaten (10, 11, 20, 21), die Rühreinrichtungen (101, 111), die Ventileinrichtungen (3) des verbindenden Durchgangs (301) zwischen der Mischkammer (1) und der Kochkammer (2), die Heizeinrichtungen (30) und die Ausgabeeinrichtungen (3, 5, 315) alle mit einer in geeigneter Weise programmierten zentralen Steuereinheit (50) verbunden sind.

3. Maschine nach Anspruch 1 oder 2, in der Füllstandssensoreinrichtungen (52) vorgesehen sind, die mit der zentralen Steuereinheit (50) verbunden und auf einem bestimmten Niveau in der Kochkammer (2) angeordnet sind.

4. Maschine nach einem der vorhergehenden Ansprüche 1 bis 3, in der Temperatursensoreinrichtungen (53) vorgesehen sind, die in der Kochkammer (2) angeordnet sind.

5. Maschine nach einem der vorhergehenden Ansprüche 1 bis 4, in der die Ausgabeeinrichtungen einen Kolben (3) beinhalten, der mit Antriebsmitteln (4, 404) ausgestattet ist, welcher gleitend in der Kochkammer (2) montiert und abnehmbar an einem Ende (102) der Kammer eingeführt ist, sowie ein Ausgabeventil (5, 315), das am gegenüberliegenden Ende (202) der Kochkammer (2) angeordnet ist.

6. Maschine nach Anspruch 5, in der die Antriebsmittel (4, 404) des Kolbens (3) mit Stoppeinrichtungen (214, 304) am Hubende des Kolbens (3) ausgestattet sind.

7. Maschine nach Anspruch 5 oder 6, in der die Kochkammer (2) auf ihrer Innenwand mit zumindest einer axialen Rille (212) versehen ist, die sich über einen entsprechenden Abschnitt der Wand erstreckt.

8. Maschine nach einem der vorhergehenden Ansprüche 5 bis 7, in der die Ventileinrichtungen des Durchgangs (301) den Kolben (3) umfassen, wobei die Öffnung des Durchgangs (301) zur Kochkammer (2) durch den Kolben abgesperrt wird.

9. Maschine nach einem der vorhergehenden Ansprüche 1 bis 8, in der die Heizeinrichtungen der Kochkammer (2) Einrichtungen (434, 103, 105, 115) zum Einspritzen eines erhitzten gasförmigen Fluids beinhalten, das von geeigneten Erzeugungseinrichtungen (30) bereitgestellt wird.

10. Maschine nach Anspruch 9, in der die Kochkammer (2) mit Entlüftungseinrichtungen (122) für das überschüssige erhitzte gasförmige Fluid ausgestattet ist.

11. Maschine nach Anspruch 9 oder 10, in der die Einrichtungen zum Einspritzen eines erhitzten gasförmigen Fluids einen Auslass (434) für die Zuführung des Fluids beinhalten, der mit einem Ende der Stange (103) des Kolbens (3) verbunden ist, wobei die Stange (103) rohrförmig und hohl ist, und wobei ein ebenfalls rohrförmiger und hohler Schaft (105) vorgesehen ist, der koaxial und konzentrisch zu der Stange (103) ist und gleitend an einem Ende in die Stange eingeführt ist, während das gegenüberliegende Ende mit der Wand (5) der Kochkammer (2) verbunden ist, auf der das Ausgabeventil (5, 315) angeordnet ist, und wobei mehrere radiale Löcher (115) für das Auslassen des erhitzten gasförmigen Fluids vorgesehen sind.

12. Maschine nach Anspruch 11, in der die Auslasslöcher (115) für das erhitzte gasförmige Fluid mit gleichem Achs- und Winkelabstand zueinander angeordnet sind.

13. Maschine nach einem der vorhergehenden Ansprüche 5 bis 12, in der die Mischkammer (1), die Kochkammer (2), der Kolben (3) und das Ausgabeventil (5, 315) durch abdichtende Verbindungen miteinander verbunden sind, die keine weiteren Anschlussmittel erfordern, so dass die Maschine ohne besondere Werkzeuge abgebaut werden kann.

## Revendications

1. Une machine pour la préparation de produits alimentaires liquides et épais, comprenant : des moyens (10, 11) d'alimentation et de dosage d'au moins un ingrédient solide essentiellement pulvérulent et des moyens (20, 21) d'alimentation et de dosage d'au moins un ingrédient liquide qui introduisent les ingrédients respectifs dans une chambre de mélange (1) équipée de moyens agitateurs (101, 111) ; ladite chambre de mélange (1) communiquant, par l'intermédiaire d'un conduit (301) contrôlé par des moyens à vanne (3), avec la chambre (2) de cuisson du mélange préparé, ladite machine étant **caractérisée en ce que** ladite chambre de cuisson (2) est équipée de moyens de chauffage (434, 103, 105, 115) et de moyens (3, 5, 315) de distribution du produit liquide et épais ainsi obtenu.

2. La machine selon la revendication 1, **caractérisée en ce que** lesdits moyens (10, 11, 20, 21) d'alimentation et de dosage des ingrédients, lesdits moyens agitateurs (101, 111), lesdits moyens à vanne (3) du conduit (301) de communication entre la chambre de mélange (1) et la chambre de cuisson (2), lesdits moyens de chauffage (30) et lesdits moyens de distribution (3, 5, 315) sont tous reliés à une unité centrale de contrôle (50) opportunément programmée.

3. La machine selon la revendication 1 ou 2, **caractérisée en ce que** des moyens détecteurs de niveau (52) sont prévus, reliés à ladite unité centrale de contrôle (50) et positionnés à un niveau donné dans ladite chambre de cuisson (2).

4. La machine selon l'une quelconque des revendications précédentes de 1 à 3, **caractérisée en ce que** des moyens détecteurs de température (53) sont prévus, positionnés dans ladite chambre de cuisson (2).

5. La machine selon l'une quelconque des revendications précédentes de 1 à 4, **caractérisée en ce que** lesdits moyens de distribution comprennent un piston (3) doté de moyens d'actionnement (4, 404), monté de façon coulissante dans ladite chambre de cuisson (2) et inséré de façon amovible dans une extrémité (102) de cette même chambre, ainsi qu'une soupape de distribution (5, 315) positionnée au niveau de l'extrémité opposée (202) de ladite chambre de cuisson (2).

6. La machine selon la revendication 5, **caractérisée en ce que** lesdits moyens d'actionnement (4, 404) dudit piston (3) sont pourvus de moyens d'arrêt (214, 304) au niveau de la fin de la course dudit piston (3).

7. La machine selon la revendication 5 ou 6, **caractérisée en ce que** ladite chambre de cuisson (2) présente, sur sa paroi latérale intérieure, au moins une rainure axiale (212) le long d'une portion correspondante de ladite paroi.

8. La machine selon l'une quelconque des revendications précédentes de 5 à 7, **caractérisée en ce que** les moyens à vanne dudit conduit (301) comprennent ledit piston (3), l'ouverture dudit conduit (301) dans ladite chambre de cuisson (2) étant bloquée par ledit piston.

9. La machine selon l'une quelconque des revendications précédentes de 1 à 8, **caractérisée en ce que** lesdits moyens de chauffage de la chambre de cuisson (2) comprennent des moyens (434, 103, 105, 115) d'injection d'un fluide gazeux chauffé, alimenté par des moyens de génération (30) appropriés.

10. La machine selon la revendication 9, **caractérisée en ce que** ladite chambre de cuisson (2) est équipée de moyens (122) de décharge du fluide gazeux chauffé en excès.

11. La machine selon la revendication 9 ou 10, **caractérisée en ce que** lesdits moyens d'injection d'un fluide gazeux chauffé comprennent un orifice (434) d'émission du fluide, associé à une extrémité de la tige (103) dudit piston (3), ladite tige (103) étant tubulaire et creuse, un arbre (105) également tubulaire et creux étant prévu, cet arbre étant coaxial et concentrique à ladite tige (103) et étant inséré de façon coulissante à une extrémité dans cette même tige, l'extrémité opposée étant associée à la paroi (5) de ladite chambre de cuisson (2) sur laquelle se trouve ladite soupape de distribution (5, 315), une pluralité de trous radiaux (115) étant prévus pour décharger le fluide gazeux chauffé.

12. La machine selon la revendication 11, **caractérisée en ce que** lesdits trous (115) de décharge du fluide gazeux chauffé sont régulièrement espacés, axialement et angulairement, les uns des autres.

13. La machine selon l'une quelconque des revendications précédentes de 5 à 12, **caractérisée en ce que** ladite chambre de mélange (1), ladite chambre de cuisson (2), ledit piston (3) et ladite soupape de distribution (5, 315) sont reliés entre eux par des raccordements étanches et sans la nécessité d'autres moyens d'accouplement, ce qui permet ainsi de démonter la machine sans utiliser aucun outil spécial.
